# EUROPEAN PATENT APPLICATION

(11) **EP 1 981 217 A1**
(43) Date of publication of application: **15.10.2008**
(21) Application number: 07007558.5
(22) Date of filing: 12.04.2007
(51) Int. Cl.: H04L 12/46

(54) **Method for forwarding data packets in an access network and device**

(71) Applicant: Nokia Siemens Networks Oy, 02610 Espoo (FI)
(72) Inventor: Fröhler, 82065 Baierbrunn (DE)
(74) Representative: Schober, Ralf Stefan

(57) **Abstract**

Described is a method for forwarding data packets in an access network. The method comprises:
- establishing a connection (49) between two devices (CPE1, BNG1) with the help of a forwarding device (AGS2), and
- in the forwarding device (AGS2) forwarding a data packet of the connection in a first transmission direction using learned relations between addresses (MAC2) and output ports (P1, P2).

## Description

The invention relates to a method for forwarding data packets in an access network. The method comprises:
- establishing a connection between two devices with the help of a forwarding device,
- in the forwarding device forwarding a data packet of the connection in a first transmission direction using learned relations between addresses and output ports.

The connection may be an IP (Internet Protocol) connection on a higher protocol layer. Alternatively, the connection may be a point to point connection, especially a point to point connection based on a special network type.

One of the two devices may be a user device. The user device may be a stand alone computer, for instance of a private person. Alternatively, the user device may be a gateway of a private home network or of the network of an enterprise.

The other of the two devices may be an edge node device of an access network, i.e. a device at the border between the access network and an IP network. Such devices are called, for instance, broadband network gateway (BNG) or broadband remote access server (BRAS).

The forwarding device may typically be a network node of the access network. The forwarding device may fulfill aggregation functions additionally to the forwarding function.

The data packet may comprise a header and a payload. The header may include address data that is used for forwarding the data packet. Examples for address data are addresses or virtual circuit identifiers in case of ATM (Asynchronous Transfer Mode) cells. The payload may include control data for higher protocol layers or user data, for instance speech data, video data, program data etc.

Technologies for transmitting the data packets in the access network may be Ethernet (cable fiber), token ring, FDDI (Fiber Distributed Data Interface), ATM etc.

It is an object of the invention to provide a simple method for forwarding data packets, especially in an access network. The method should especially allow the simple scaling of the network, i.e. without or only with a few operator actions. In particular, the method should also allow the re-establishing of resources in an easy way after a failure. Furthermore, a corresponding device should be given.

This object is solved by a method according to claim 1. Embodiments are given in the dependent claims.

In an embodiment of the invention the method may comprise:
- determining a first network identifier of the network via which the data packet has been transmitted,
- using the network identifier but not a source address to determine an interface of the forwarding device for forwarding the data packet.

This identifier may be different from a MAC (Medium Access Control) address. The identifier may be for example a VLAN (Virtual Local Area Network) identifier. Thus, it is possible to determine and re-establish resources in an easy way after a failure has been occurred. It is only necessary to determine the VLAN with the failure and to re-establish a relative small table for this VLAN. The table is small because typically only a few devices are able to process the data for one VLAN, for instance, less than 15 or less than 10 devices, especially edge node devices. This is different from the case in which the source address also has to be considered for a special VLAN to determine a table with a relation between destination addresses and ports.

In a next embodiment the forwarding may comprise:
- selecting a table depending on the first network identifier,
- using the selected table to determine the interface.

A table is a very simple possibility to implement the selection. Look-up-tables may be used to determine the relation very fast. Alternatively, a data base system may be used, for instance.

In another embodiment the following features is used:
- the identifier identifies a network that identifies only one device, for instance, a VLAN per node relation which enables user isolation between nodes.

In an embodiment one table is used for each identifier. The table is therefore determined if the identifier is read.

The network identifier may be a VLAN identifier. Alternatively, similar technologies may be used, for instance filtering in MAC switches as described in IEEE 802.1D.

In one embodiment the forwarding device may forward data packets of the connection in a second direction that is opposite to the first direction using only a second network identifier but no destination address. Thus, there are different forwarding mechanisms in upward direction and downward direction. This allows to use the advantages of different forwarding mechanisms in the forwarding device. In one embodiment the second direction is the downward direction. It is not necessary to perform address learning if only the identifier is used for forwarding. Furthermore, no memory space is necessary for storing such tables.

Both network identifiers used in upward direction and downward direction may identify the same network. This, for instance, reduces the number of VLANs and allows simple tracing of errors. Especially, both identifiers may have the same numerical value.

The above mentioned first direction may be the upstream direction from a user device to a network. Address learning may be installed only in this direction to avoid address learning in the opposite direction. In the downward direction a network identifier may be sufficient for forwarding.

The address learning may be performed according to known methods, for instance in Ethernets. Therefore it is not necessary to change existing implementations with regard to this point.

The connection may be a connection in a protocol layer that is preferable immediately below a PPP (Point to Point Protocol) connection layer. An example for a PPP connection is given by the IETF (Internet Engineering Task Force) in RFC (Request for Comment) 1661. Alternatively, comparable point to point protocols may be used. The connection below the PPP is for instance a PPPoE (PPP over Ethernet) connection according to RFC 2216 or a PPPoA (PPP over ATM) connection according to RFC 2364. There are already implementations for these protocols that can be used for the interworking of devices from different suppliers.

Alternatively the connection itself may be an IP connection. In this case, for instance, the DHCP (Dynamic Host Control Protocol) may be used for the setup of the user device, i.e. to assign and transmit an IP address to the user device. DHCP is a de facto standard according to RFC 2131 (IP version 4) or RFC 3315 (IP version 6). RFC 3064 and RFC 4243 relate to option 82, i.e. a vendor specific option that may be used in DHCP. It is again possible to use already existing implementations of DHCP.

The invention also relates to a network device, especially to an aggregation node device, for example an Ethernet aggregation switch. In an embodiment the network device comprises:
- a receiving unit for receiving messages, for instance in upstream direction and/or in downstream direction,
- a sending unit for sending messages, for instance in upstream direction and/or in downstream direction and
- a forwarding unit for forwarding messages from the receiving unit to the sending unit,
- the forwarding unit accesses a memory unit,
at least one of the following features is fulfilled:
the memory unit stores relationships between destination addresses and output ports of the network device for different network identifiers independently of source addresses,
the forwarding unit uses different forwarding mechanisms in upstream direction and downstream direction. By using these features it is possible to achieve the technical effects mentioned above.

In an embodiment of the device the memory unit is part of the network device. Fast access to the memory is possible because external messages are not necessary for access. The memory may use the same power supply and casing than the network device.

In a next embodiment the network device may have units to fulfill the function of the forwarding device according to one of the methods mentioned above. Thus it is possible to exploit the same technical effects.

As far as in this application "may" is used, this term shall have the meaning of an actual embodiment and/or also the technical possibility of doing so. The appending figures are for illustrative purposes only and are not intended to limit the scope of the invention. In the following some embodiments of the invention are described with reference to the figures, wherein:
- Figure 1: illustrates a network,
- Figure 2: illustrates a message flow for a PPPoE session setup, and
- Figure 3: illustrates a message flow for DHCP.

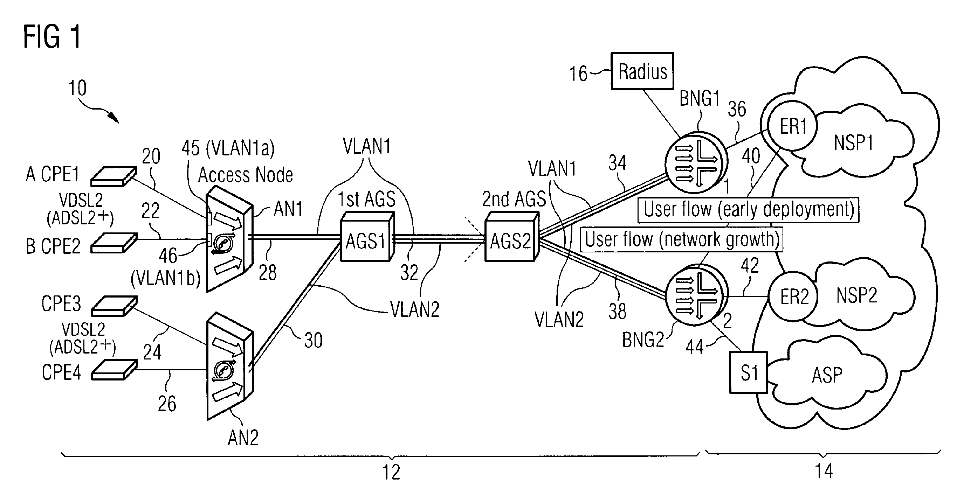

Figure 1 illustrates a network 10 comprising an access network 12 and a core network 14. The access network 12 comprises:
- four or more than four user devices CPE1 to CPE4 also called customer premises entity, for instance, the first user device CPE1 belongs to a subscriber A and the second user device CPE2 belongs to a subscriber B,
- two or more than two access node devices AN1, AN2, for instance of the type hiX56xx of the Siemens AG, where xx stands for instance for 20, 25, 30 etc.,
- one or more than one optional first level aggregation node device AGS1, for instance of the type hiD 66xx of the Siemens AG, where xx stands for instance for 50 or 70 etc.,
- one or more than one second level aggregation node device AGS2, for instance of the type hiD 66xx of the Siemens AG, two or more of two edge node devices BNG1, BNG2 at the edge of the access network 12,
- a RADIUS (Remote Authentication Dial In User Service) server 16.

In the example the access network is based on Ethernet technology, i.e. a switched layer two technology. Layer three is completely processed only in user devices CPE1 to CPE4 and in edge node devices BNG1, BNG2.

The user devices CPE1 and CPE2 are connected to the access node device AN1 via lines 20 and 22 respectively, for instance xDSL (x Digital Subscriber Line, where x stands for instance for A - asymmetrical or V - very high speed) lines. The user devices CPE3 and CPE4 are connected to the access node device AN2 via lines 24 and 26 respectively, for instance xDSL lines. Alternatively, wireless technologies may be used to connect the user devices CPE1 to CPE4 with the access network 12, for instance WLAN (Wireless LAN).

Access node device AN1 is connected to aggregation node device AGS1 via a line 28. Access node device AN2 is connected to aggregation node device AGS1 via a line 30. The lines 28 and 30 may be electrical lines or optical fibers.

The aggregation node device AGS1 is connected to the aggregation node device AGS2 via a line 32, for instance also an electrical cable or a fiber. A line 34 connects the aggregation node device AGS2 and the edge node device BNG1. A line 38 connects the aggregation node device AGS2 and the edge node device BNG2. The lines 34, 38 may be electrical lines or optical fibers.

A first virtual LAN VLAN1 is assigned to access node device AN1. Traffic of the first virtual LAN VLAN1 is forwarded in the first aggregation node device AGS1 and in the second aggregation node device AGS2. Edge node device BNG1 and edge node device BNG2 receive or create traffic for the first virtual LAN VLAN1.

A second virtual LAN VLAN2 is assigned to access node device AN2. Traffic of the second virtual LAN VLAN2 is also forwarded in the first aggregation node device AGS1 and in the second aggregation node device AGS2. Edge node devices BNG1 and BNG2 receive or create traffic for the second virtual LAN VLAN2.

It is assumed that the edge node device BNG1 was the first edge node device BNG1 of the access network 12. After the edge node device BNG1 reached its switching and routing capacity, the second edge node device BNG2 has been used for expanding the network, for instance with regard to the second user device CPE2.

The core network 14 comprises:
- the edge node devices BNG1 and BNG2,
- edge router devices ER1 and ER2,
- an application server S1,
- two network service provider networks NSP1, NSP2,
- an application provider network ASP.

The core network 14 is a full IP-network. A line 36 connects edge node device BNG1 to edge router device ER1. Lines 40, 42 and 44 connect edge node device BNG2 with edge router device ER1, edge router device ER2 and application server S1 respectively. There may be of course a different number of edge router devices and provider networks.

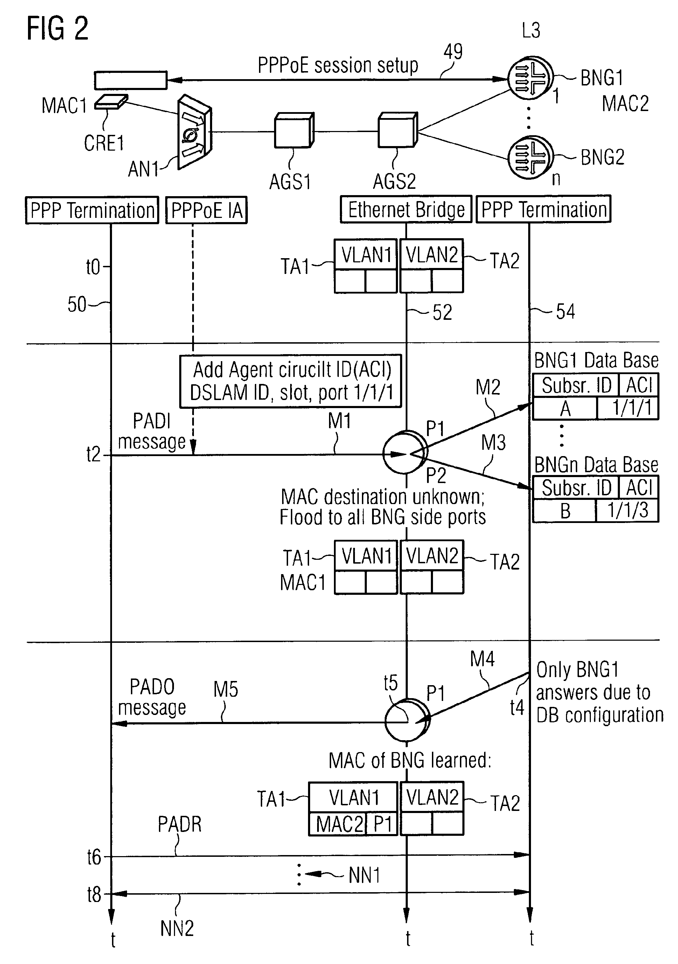

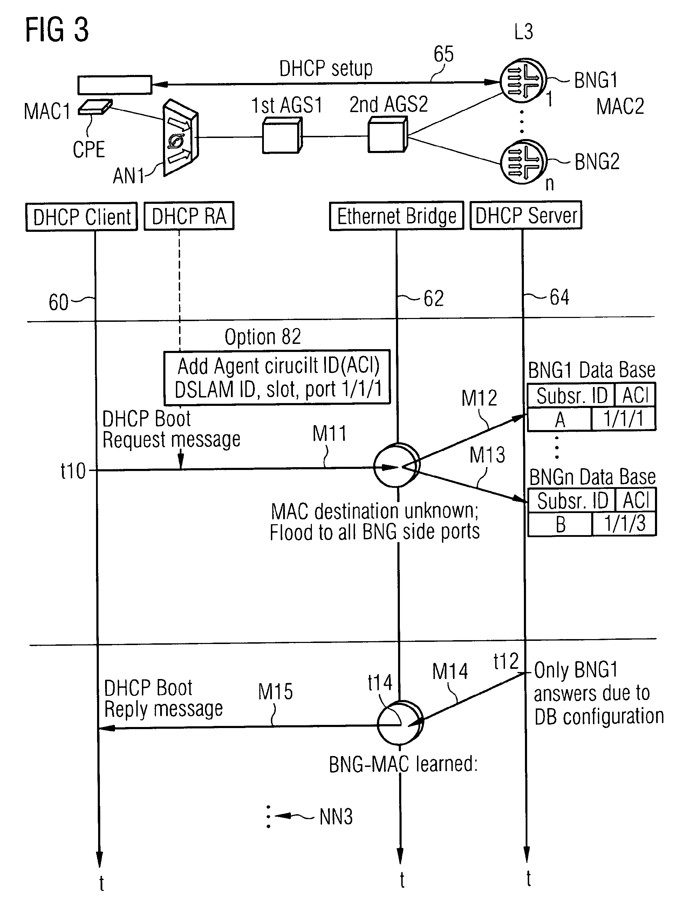

Furthermore, a port VLAN VLAN1a may be additionally used for subscriber A only, i.e. for user device CPE1, see line 45. A separate port VLAN VLAN1b may be used for subscriber B only, i.e. for user device CPE2, see dashed lines 46 and 48. Nevertheless the message flow will be similar to the message flow explained below with reference to Figures 2 and 3. Other relations between VLANs and units, services or groups are possible as well.

Figure 2 illustrates a message flow for a PPPoE connection 49 setup with PPPoE intermediate agent IA used in the access node AN1. Three time axis 50, 52 and 54 correspond to actions in the user device CPE1, in the aggregation node device AGS2 and in edge node device BNG1 respectively.

The user device CPE1 has a MAC address MAC1 and is one termination of the PPPoE connection 49. The edge node device BNG1 is the other termination of the PPPoE connection 49 and has a MAC address MAC2. The access node AN1 comprises an intermediate agent IA, for instance, implemented by a program. Aggregation node device AGS2 fulfils the function of an Ethernet bridge.

At time t0 it is assumed that a forwarding table TA1 for virtual LAN VLAN1 is empty. Furthermore, it is assumed that a forwarding table TA2 for virtual LAN VLAN2 is empty, too.

Subsequently, a first message M1 is sent from the user device CPE1 via the access node device AN1 and via aggregation node device AGS1 to the aggregation node device AGS2 at time t2. The first message M1 is a PADI (PPPoE Active Discovery Initiation) message according to the PPPoE protocol and serves for establishing the connection 49.

The first message M1 comprises:
- the MAC address MAC1 in the source address field,
- an identifier ACI (Access Circuit Identifier, and
- data of the PADI message.

The first message M1 is sent as a multicast from user device CPE1 because user device CPE1 does not know which edge node device BNG1, BNG2 is responsible for the connection 49. The identifier ACI is included by the access node AN1, i.e. by the intermediate agent IA. In the example the ACI includes a DSLAM (Digital Subscriber Line Access Multiplexer) ID, a slot ID and a port ID, for instance the sequence 1/1/1. The ACI for subscriber B is for example 1/1/3, i.e. first access node device AN2, first slot and third port. Alternatively subscriber B may be connected to a different slot of access node device AN1 compared with the slot for subscriber A.

The message M1 is forwarded by the aggregation node devices AGS1 and AGS2 at all ports that transmit data to the network side, i.e. to the core network 14. This kind of forwarding is also called flooding. In the example, aggregation node device AGS2 has two ports P1, P2 at the network side. Port or interface P1 is connected with line 34 which is connected to edge node device BNG1. Port P2 is connected with line 38 which is connected to edge node device BNG2.

The first message M1 is forwarded in the aggregation node device AGS2 by sending a second message M2 to the edge node device BNG1 and by sending a third message M3 to the edge node device BNG2. The messages M1 to M3 are identical to each other. The aggregation node device AGS2 stores the MAC address MAC1 to enable a check of answering messages that it receives in response to the multicast.

Edge node device BNG1 receives the message M2 and processes the identifier ACI. Edge node device BNG1 has a list with all ACIs that it should serve. Edge node device BNG1 checks this list and finds that it is responsible for ACI 1/1/1. Then, the edge node device BNG1 determines, for instance, with the help of the RADIUS server 16 that subscriber A belongs to the ACI with the value 1/1/1. Furthermore authentication is performed, for instance, with the help of a password that is included in message M2. If the authentification is successful, edge node device BNG1 sends an answering message M4 to aggregation node AGS2 in response to the second message M2 at time t4.

The answering message M4 is a PADO (PPPoE Active Discovery Offer) message according to PPPoE and comprises, for instance:
- the source address of the message M3 in the destination address field, i.e. MAC address MAC1 in the destination field,
- the source address MAC2 of the edge node device BNG1, and
- PADO data.
The message M4 does not include the identifier ACI in the embodiment. Alternatively it is possible to include the identifier ACI in message M4.

The edge node device BNG2 receives the message M3 and checks if the ACI with the value 1/1/1 is in its list of ACIs. In the example this is not the case. Therefore edge node device BNG2 does not send an answering message in response to message M3. In the example, edge node device BNG2 will be responsible, for instance, for subscriber B with the ACI 1/1/3.

At time t5 edge node device AGS2 receives the answering message M4 at the interface/port P1. In response to the receiving of the answering message M4 the edge node device AGS2 stores the port number of port P1 together with the second source address MAC2 in the table TA1, i.e. the table for that VLAN1 that transmits the messages M1 to M4. The address MAC1 may be deleted in the memory of edge node device AGS2 after updating the table TA1 because an answer to the multicast has been received as indicated in the destination address field of message M4.

The aggregation node device AGS2 forwards the first answering message M4 by sending an answering message M5 to the access node device AN1. The answering message M5 comprises, for instance:
- a destination address copied from message M4, i.e. address MAC1,
- a network identifier VLAN1 for VLAN1, and
- PADO data.

The message M4 is forwarded by sending message M5 within the aggregation node device AGS2 using only the network identifier VLAN1, but not the destination address MAC1. Therefore no address learning is necessary in the downward direction, i.e. in the direction to the user device CPE1. If aggregation node device AGS2 has only one connection in the downstream direction, it is not necessary to consider the network identifier.

At time t6 a PADR (PPPoE Active Discovery Request) message according to PPPoE is sent from user device CPE1 to edge node device BNG1. The message PADR includes the address MAC2 of the edge node device BNG1 in the destination address field. The address MAC2 is copied from the source address field of message M5. The aggregation node device AGS2 forwards the PADR message with the help of the table TA1, i.e. the table for VLAN1, entry for MAC2, through port P1 to the edge node device BNG1.

Messages NN1 are then transmitted to establish the connection 49, for instance a PADA (PPPoE Active Discovery Acknowledgement) message. After this, user data is transmitted with the help of messages NN2 in both direction via the connection 49. Connection 49 may be terminated from the user device side or from the network side, for instance, by using a PADT message according to PPPoE.

Figure 3 illustrates a message flow for DHCP with a DHCP Relay agent RA used in the access node AN1. Three time axis 60, 62 and 64 correspond to actions in the user device CPE1, in the aggregation node device AGS2 and in edge node device BNG1 respectively.

The user device CPE1 has again a MAC address MAC1 and is the DHCP client for a DHCP setup 65. The edge node device BNG1 is the DHCP server for the DHCP setup and has a MAC address MAC2. The access node AN1 comprises the relay agent RA, for instance, implemented by a program. Aggregation node device AGS2 fulfils the function of an Ethernet bridge.

At the beginning it is assumed that a forwarding table for VLAN1 is empty. Furthermore, it is assumed again that a forwarding table for VLAN2 is empty, too.

A first message M11 is sent from the user device CPE1 via the access node device AN1 and via aggregation node device AGS1 to the aggregation node device AGS2 at time t10. The first message M11 is a DHCP boot request message according to the DHCP protocol and is part of DHCP setup 65.

The first message M11 comprises:
- the MAC address MAC1 of the user device CPE1 in the source address field,
- an identifier ACI (access circuit identifier, and
- DHCP data.

The first message M11 is sent as a multicast from user device CPE1 because user device CPE1 does not know which edge node device BNG1, BNG2 will be the DHCP server. The identifier ACI of subscriber A is included by the access node AN1, i.e. by the relay agent RA, for instance in the option "82" field. In the example, the ACI includes a DSLAM ID, a slot ID and a port ID, for instance the sequence 1/1/1.

The message M11 is forwarded by the aggregation node devices AGS1 and AGS2 at all ports that transmit data to the network side. This kind of forwarding is called flooding. In the example, aggregation node device AGS2 has two ports P1, P2 at the network side. Port or interface P1 is connected with line 34 which is connected to edge node device BNG1. Port P2 is connected with line 38 which is connected to edge node device BNG2.

The first message M11 is forwarded in the forwarding device AGS2 by sending a second message M12 to the edge node device BNG1 and by sending a third message M13 to the edge node device BNG2. The messages M11 to M13 are identical to each other. The aggregation node device AGS2 stores the MAC address MAC1 to enable a check of answering messages that it receives in response to the multicast.

Edge node device BNG1 receives message M12 and processes the identifier ACI. Edge node device BNG1 has a list with all ACIs that it should serve. Edge node device BNG1 checks this list and finds that it is responsible for ACI 1/1/1. Then, the edge node device BNG1 determines, for instance, with the help of the RADIUS server 16 that subscriber A belongs to the ACI with the value 1/1/1. The edge node device BNG1 sends an answering message M14 to aggregation node AGS2 in response to the second message M12 at time t12.

The answering message M14 is a DHCP boot reply message according to DHCP and comprises, for instance:
- the source address of the message M13 in the destination address field, i.e. MAC address MAC1 in the destination address field,
- the source address MAC2 of the edge node device BNG1, and
- DHCP data.

The message M14 does not include the identifier ACI in the embodiment. Alternatively it is possible to include the identifier ACI in message M14.

The edge node device BNG2 receives the message M13 and checks if the ACI with the value 1/1/1 is in its list of ACIs. In the example this is not the case. Therefore, edge node device BNG2 does not send an answering message in response to message M13. In the example, edge node device BNG2 will be responsible, for instance, for subscriber B with the ACI 1/1/3.

At time t14 edge node device AGS2 receives the answering message M14 at port P1. In response to receiving the answering message M14 the edge node device AGS2 stores the port number of port P1 together with the second source address MAC2 in the table of this VLAN1 that transmits the messages M11 to M14. Optionally, the address MAC1 is deleted in the memory of edge node device AGS2 after updating the table because an answer to the multicast was received as indicated in the destination address field of message M14.

The aggregation node device AGS2 forwards the answering message M14 by sending an answering message M15 to the access node device AN1. The answering message M15 comprises, for instance:
- a destination address copied from message M4, i.e. address MAC1,
- a network identifier VLAN1 for VLAN1, and
- the other data of message M14.

The message M14 is forwarded by sending message M15 in the aggregation node device AGS2 using only the network identifier VLAN1 but not the destination address MAC1, i.e. a port to VLAN relation is used. Therefore no address learning is necessary in the downward direction, i.e. in the direction to the user device CPE1.

Messages NN3 are then transmitted to establish an IP (Internet Protocol) connection. After this, user data is transmitted with the help of the messages NN3 in both directions. In the upward direction MAC address MAC2 of the edge node device BNG1 is used.

In other words, an enhanced Ethernet connect to scaling Edges is disclosed, i.e. improved possibilities of Ethernet access scalable for more than one edge router in the network. The Broadband Access Networks evolve from single edge architecture with one single Broadband Remote Access Server (BRAS) or IP Edge device (e.g. Router) to multi-edge architectures with multiple edge devices (BRAS and/or Routers), see Figure 1.

The Access Nodes will be typically linked to the Edge devices (multiple BRAS/BNG or IP Edge Routers) via a single or multi stage Ethernet Aggregation switch. In typical carrier grade Ethernet access networks VLANs are used for scaling the network. VLANs are used to forward and separate traffic due to various parameters. The following VLAN scenarios are applicable in carrier grade Ethernet networks:
- VLANs per Subscriber (Subscriber identification/bundling for shaping),
- VLANs per Node/Module (Add scalability to VLAN per subscriber via QinQ),
- VLAN per Node (User Isolation between Nodes),
- VLANs per Service (Service bundling, e.g. Best Effort Internet Access), and
- VLANs per User Group (Group bundling, e.g. Residential Subscribers).

Growth of penetration or number of subscribers in an access network may be handled very differently by the network provider. One option would be to have a fixed correlation between access nodes, aggregation switches and network edge devices as BRAS or IP edge routers. When the growing subscriber penetration fills up the resources of an single network element, a new network element needs to be installed. To provide fixed correlation among the network elements, reallocation may be requested e.g. installing a second BRAS within an access network domain may request to reallocate access nodes from BRAS_1 to BRAS_2. This method is not very flexible and leads to increased OPEX (OPerational EXpenditure).

The more flexible way is to allow multiple BRASes and/or multiple IP edge routers to serve a single access node. In this case no reallocation between BRAS and access nodes would be requested in the case that penetration in the access nodes grows-up and requires the installation of a second or further BRASes.

However, this flexibility in the network architecture will require also VLAN resources when using VLANs for the traffic forwarding and will raise scalability problems. In larger networks, VLAN per subscriber will be combined with VLAN per Node (double tagging) and forwarding in the second AGS is based on the outer VLAN per Node tag only. In the above shown case, forwarding would also request one VLAN per Node and BNG.

Therefore a flexible network architecture is proposed to use different forwarding methods within a single service connection/service flow for upstream and downstream. In the network application described above, a single access node will be connected to several BRASes, and Ethernet bridging mode will be used in the second AGS2 for forwarding the user and control flows from the access node to the network edge devices (upstream flows).

A "split horizon" or also a so called "port isolation" functionality in the second level AGS (AGgregation switch) AGS2 assures that frames from the end customers are forwarded only to the links where the edge devices BNG1, BNG2 are connected to and not to links where first level AGS AGS1 or any other equipment are connected. At PPPoE or DHCP session setup by the end customer device, the broadcast PDUs (Protocol Data Unit) will be sent to all edge devices connected within this access domain but only the serving edge device will answer on behalf of the correct MAC source address, a unique end customer specific VLAN-ID (PVLAN - Port VLAN), or port information added by a PPPoE-Intermediate Agent or DHCP Relay Agent.

Figure 2 gives as example the message flow for PPPoE session setup with PPPoE Intermediate Agent used in the Access Node. In downstream direction forwarding of the user flows in the second AGS AGS2 can be further based on the outer VLAN tag which identifies the access node only.

Supporting the new proposal ensures high level of Security in the Layer 2 access network because downstream forwarding is based only on VLAN without using the MAC table entries, i.e. without MAC learning. Upstream forwarding is based on bridging and address learning to provide the flexibility that is needed for the growth of the access network.

Advantages are:
- good scaling properties because of low numbers of MAC addresses, and
- low provisioning (only DSLAM VLAN), i.e. less information is necessary for configuring.

### List of reference signs

10 network
12 access network
14 core network
16 RADIUS server
20 to 44 line
45 VLAN1a
46 VLAN1b
49 PPPoE connection
50 to 64 time axis
65 IP connection
t0 to t14 time
A, B subscriber
CPE1 to CPE4 user device
AN1, AN2 access node device
VLAN1, VLAN2 virtual LAN
AGS1, AGS2 switch device
BNG1, BNG2 gateway
ER1, ER2 edge router device
NSP1, NSP2 network service provider
ASP application service provider
MAC1, MAC2 address
TA1, TA2 table
NN1 to NN3 message
PPP Point to Point protocol
PPPoE PPP over Ethernet
DHCP Dynamic Host Control Protocol
ACI Access Circuit Identifier
DSLAM Digital Subscriber Line Access Multiplexer IA Intermediate Agent
RA Relay Agent

## Claims

1. Method for forwarding data packets in an access network, comprising:
establishing a connection (49, 65) between two devices (CPE1, BNG1) with the help of a forwarding device (AGS2),
in the forwarding device (AGS2) forwarding a data packet of the connection in a first transmission direction using learned relations between addresses (MAC2) and output ports (P1, P2).

2. Method of claim 1, **characterized in that** the forwarding comprises:
determining a first network identifier (VLAN1) of the network via which the data packet has been transmitted,
using the network identifier (VLAN1) but not a source address to determine an interface (P1, P2) of the forwarding device (AGS2) for forwarding the data packet.

3. Method according to claim 2, **characterized in that** the forwarding comprises:
selecting a table (TA1) depending on the first network identifier (VLAN1),
using the selected table (TA1) to determine the output port (P1) .

4. Method according to claim 2 or 3, **characterized in that** the identifier (VLAN1) identifies a network that identifies only one device (AN1).

5. Method according to one of the claims 2 to 4, **characterized in that** the network identifier (VLAN1) is a virtual LAN identifier.

6. Method according to one of the preceding claims, especially according to claim 4, **characterized by**:
in the forwarding device (AGS2) forwarding data packets of the connection (49, 65) in a second direction that is opposite to the first direction using only a second network identifier (VLAN1) but no destination address.

7. Method according to one of the claims 2 to 5 and claim 6, **characterized in that** both network identifiers identify the same network (VLAN1).

8. Method according to one of the preceding claims, **characterized in that** the first direction is the upstream direction from a user device (CPE1) to a network (14).

9. Method according to one of the preceding claims, **characterized by**:
sending a first message (M1) from a first device (AN1, AGS1) to the forwarding device (AGS2) for establishing the connection (49, 65),
the first message (M1) comprising,
- a first source address (MAC1), and
- a third identifier (ACI),
forwarding the first message (M1) in the forwarding device (AGS2) by sending a second message (M2) to a second device (BNG1) and by sending a third message (M3) to a third device (BNG2),
sending a first answering message (M4) in response to the
second message (M2) and to the third identifier (ACI) from the second device (BNG1) to the second forwarding device (AGS2),
the first answering message (M4) comprising:
- a second source address (MAC2) of the second device (BNG1), receiving the first answering message (M4) in the forwarding device (AGS2) at an interface (P1),
in response to receiving the first answering message (M4) storing an interface identifier (P1) for the interface (P1) together with the second source address (MAC2),
forwarding the first answering message (M4) by sending a second answering message (M5) from the forwarding device (AGS2) to the first device (AN1, AGS1),
the second answering message (M5) comprising:
- a destination address, and
- a network identifier (VLAN1),
forwarding the second answering message (M5) in the forwarding device (AGS2) using the network identifier (VLAN1) but not the destination address.

10. Method according to one of the preceding claims, **characterized in that** the connection is a connection (49) in a protocol layer that is below a PPP connection layer.

11. Method according to one of the claims 1 to 9, **characterized in that** the connection is an IP connection (65),
and **in that** the DHCP protocol is used to setup a user device (CPE1) of the IP connection (65).

12. Network device (AGS2),
comprising:
a receiving unit for receiving messages,
a sending unit for sending messages,
and a forwarding unit for forwarding messages from the receiving unit to the sending unit,
the forwarding unit accesses a memory unit,
at least one of the following features is fulfilled:
the memory unit stores relationships between destination addresses and output ports of the network device (AGS2) for different network identifiers independently of source addresses,
the forwarding unit uses different forwarding mechanisms in upstream direction and downstream direction.

13. Network device (AGS2) according to claim 12, **characterized in that** the memory unit is a part of the network device (AGS2).

14. Network device (AGS2) according to claim 12 or 13, **characterized in that** the network device (AGS2) has units to fulfill the function of the forwarding device (AGS2) according to one of the claims 1 to 11.
